Europäisches Patentamt

European Patent Office

Office européen des brevets

(19)

(11) **EP 0 897 238 A1**

(12) **EUROPEAN PATENT APPLICATION**

(43) Date of publication:
**17.02.1999 Bulletin 1999/07**

(51) Int. Cl.⁶: **H04M 3/50**

(21) Application number: **97440065.7**

(22) Date of filing: **11.08.1997**

(84) Designated Contracting States:
**AT BE CH DE DK ES FI FR GB GR IE IT LI LU MC
NL PT SE**
Designated Extension States:
**AL LT LV RO SI**

(71) Applicant:
**ALCATEL ALSTHOM COMPAGNIE GENERALE
D'ELECTRICITE
75008 Paris (FR)**

(72) Inventor: **Weiss, Christian
2103 Langenzersdorf (AT)**

(74) Representative:
**Schätzle, Albin, Dipl.-Phys. et al
Alcatel Alsthom
Intellectual Property Department,
Postfach 30 09 29
70449 Stuttgart (DE)**

(54) **Call distribution system, and method**

(57) Advanced call distribution systems and methods using skill-based routing are able to connect callers and agents in a very efficient way, whereby however waiting facilities always remain necessary in case a caller temporarily cannot be connected to an agent. Such call distribution systems and methods can be improved by using a database comprising information which under control of the caller can be sent to him in addition to or instead of information originating from an agent, for example while being waiting for said agent.

Fig. 1

**Description**

The invention relates to a call distribution system comprising

- a switch coupled to a network for making a connection between a caller and an agent in response to a call originating from said caller via said network for providing said caller with information, and
- a processor coupled to said switch for controlling said switch for making said connection between said caller and said agent in response to said call and in dependence of at least one signal associated with said caller.

Such a call distribution system is known from EP-A-740450 A2, which discloses a method and apparatus for skill-based routing in a call center, whereby said switch is a so-called PBX or Private Branch Exchange situated between a public switch (network) coupled to customer telephones (callers) and agent telephones, and whereby said processor controls said switch by using a so-called dynamic skills-based router which, in dependence of the number dialled by the customer and his own number (see page 11 lines 42-47 of EP-A-740450 A2) connects a customer with an agent. In other words, in response to said call and in dependence of signals associated with said caller, said connection is made.

This known call distribution system is disadvantageous, inter alia, because of only providing a solution to connecting callers and agents in an efficient way and because of not solving the problem of what to do in case they just cannot be connected (apart from waiting facilities).

It is an object of the invention, inter alia, to provide a call distribution system as described in the preamble which solves said problem.

Thereto, the call distribution system according to the invention is characterised in that the call distribution system comprises

- a database system coupled to said switch for providing said caller with further information in response to said call via a further connection between said caller and said database system, said further information being stored in said database system and being generated in dependence of at least one signal originating from said caller.

The call distribution system according to the invention is very advantageous, inter alia, due to offering a caller not just a first way (the agent) for getting information, but also a second way (the database) for transmitting further information to said caller, for example in case agents are not available. Said further information could for example be in the form of signals resulting in information to be displayed on a display of the telephone of said caller. Because of said database needing to know which further information should be sent to said caller, this caller generally will have to indicate this by transmitting said at least one signal to said database. Said further information could also be in the form of a fax, or ordinary mail, and therefore said further connection either (partly) coincides with said connection or does not coincide with said connection.

The call distribution system according to the invention is based on the insight, inter alia, that machines can be used to compensate at least some of the human disadvantages, and that humans can be used to compensate at least some of the machine's disadvantages.

A first embodiment of the call distribution system according to the invention is characterised in that said database system comprises a data-speech-converter for converting data into speech, said further information comprising said data being converted into said speech.

When said further information is in the form of speech, said caller does not have to take a look at his display, but can just listen instead, like also has to be done in case the information originates from said agent. Such a data-speech converter for example comprises a generator for generating predefined speech phrases like digits and keywords.

A second embodiment of the call distribution system according to the invention is characterised in that said database system comprises a speech-data-converter for converting speech into data, said signal comprising said speech being converted into said data.

When said at least one signal originating from said caller is in the form of speech, said caller may use speech to indicate which information he would like to receive from said database, or to insert data into the database, for example for booking tickets for a cinema.

A third embodiment of the call distribution system according to the invention is characterised in that said processor comprises first software for calculating a caller-agent-combination in response to said call and in dependence of said at least one signal associated with said caller.

Said first software for example comprises a BESA or Best Expert Selection Algorithm.

A fourth embodiment of the call distribution system according to the invention is characterised in that said system (switch and/or processor) comprises a queue for holding said call in case said calculating of said caller-agent-combination has not led to a result.

Said queue for holding said call could also be used in case said calculating is not done, for example due to the fact that not a single agent is available, or for example due to the fact that said caller has indicated that firstly he wants to communicate with said database.

A fifth embodiment of the call distribution system according to the invention is characterised in that said processor comprises second software for calculating an agent-caller-combination in response to said call and in dependence of said at least one signal associated with said caller.

Said second software for example comprises a BCSA or Best Call Selection Algorithm.

A sixth embodiment of the call distribution system according to the invention is characterised in that said processor makes said further connection in response to said queue holding said call.

In particular in case a caller is put on hold it could be very advantagous to offer him an alternative like said database.

A seventh embodiment of the call distribution system according to the invention is characterised in that said at least one signal associated with said caller comprises a network signal originating from said network.

When said at least one signal associated with said caller, in response to which said connection is made, comprises a network signal originating from said network, the call distribution system according to the invention becomes a highly automatised system.

A eigthth embodiment of the call distribution system according to the invention is characterised in that said at least one signal associated with said caller comprises a further signal originating from said caller.

When said at least one signal associated with said caller, in response to which said connection is made, comprises a further signal originating from said caller, the call distribution system according to the invention becomes a highly individualised system.

The invention further relates to a method for distributing calls and comprising the steps of

- making a connection between a caller and an agent via a switch coupled to a network in response to a call originating from said caller via said network for providing said caller with information, and
- controlling said switch via a processor coupled to said switch for making said connection between said caller and said agent in response to said call and in dependence of at least one signal associated with said caller.

The method according to the invention is characterised in that the method comprises the steps of

- making a further connection between said caller and a database system coupled to said switch for providing said caller with further information in response to said call, said further information being stored in said database system and being generated in dependence of at least one signal originating from said caller.

The invention yet further relates to a processor as defined in the description of the system according to the invention and/or in the description of the method according to the invention.

From EP-A-707405 A2 an automatic call distribution system with user definable logging and method therefor is known. From EP-A-526103 A2 an ACD multiflow network call distribution is known. From US-A-5,291,550 a dynamic network call distributor is known. From GB-A-2290192 A a call sharing for inbound and outbound call center agents is known. The call distribution system and method according to the invention are not known from these documents.

All references including further references cited with respect to and/or inside said references are considered to be incorporated in this patent application.

The invention will be explained in greater detail at the hand of embodiments disclosed in the drawing, whereby

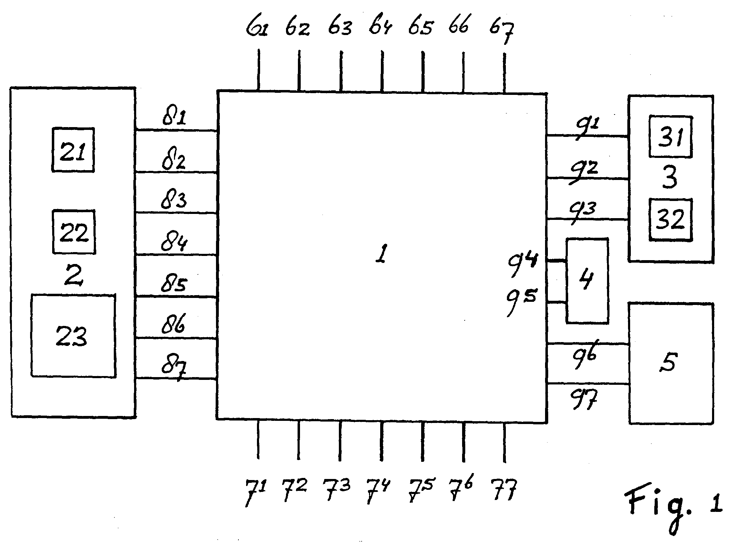

figure 1 discloses a call distribution system according to the invention comprising a switch, a processor and a database system.

The call distribution system disclosed in figure 1 comprises a switch 1 being provided with

- in/outputs 61-67 to be coupled to customers further to be called callers via a network possibly comprising further switches;
- in/outputs 71-77 to be coupled to agents;
- in/outputs 81-87 coupled to a processor 2 comprising first software 21, second software 22 and a memory 23; and
- in/outputs 91-97, of which in/outputs 91-93 are coupled to a database 3 comprising a data-speech-converter 31 and a speech-data-converter 32, of which in/outputs 94-95 are coupled to a voice-response-system 4, and of which in/outputs 96-97 are coupled to a waiting facility or queue 5.

The call distribution system functions as follows. A first caller having a first telephone number and who wants to get information via the call distribution system dials a certain telephone number belonging to said call distribution system. Via a network possibly comprising further switches not shown in figure 1 a first connection is made from said first caller to for example in/output 61 of switch 1, which informs processor 2 of said call, for example via in/output 81. Processor 2 for example receives said first telephone number and said certain telephone number and, via its first software 21, calculates which agent should handle this call, thereby possibly using data stored in memory 23, and consults, via its memory 23, whether this first agent is available. In case this first agent is available, processor 2 controls switch 1 via in/output 81 such that in/output 61 is coupled to, for example, in/output 71, resulting in said first connection now being present between the first caller and the first agent.

A second caller having a second telephone number and who wants to get information via the call distribution system dials said certain telephone number (or a further certain telephone number) belonging to said call distribution system. Via said network a second connection is made from said second caller to for example in/output 62 of switch 1, which informs processor 2 of said call, for example via in/output 82. Processor 2 for example receives said second telephone number and said certain telephone number and, via its first software 21, calculates which agent should handle this call, thereby possibly using data stored in memory 23, and consults, via its memory 23, whether this second agent is available. In case this second agent is not available, processor 2 controls switch 1 via in/output 82 such that firstly in/output 62 is coupled to voice-respons-system 4, for example via in/output 94, resulting in said second caller getting a message for example saying that the second agent is busy, and secondly in/output 62 is coupled to queue 5, for example via in/output 96, resulting in the second caller being put on hold. Further, this situation is stored as data in memory 23. As soon as said second agent becomes available, processor 2 is informed for example via in/output 72 and in/output 87, in response to which processor 2, via its second software, calculates which one of all calls originating from callers who have been put on hold should now be handled by this second agent. In case the result of this calculation is that said second agent should be connected to said second caller, processor 2 deletes said coupling between in/output 62 and in/output 96 and establishes a coupling between in/output 62 and in/output 72, resulting in said second connection now being present between the second caller and the second agent.

A third caller having a third telephone number and who wants to get information via the call distribution system dials said certain telephone number (or a yet further certain telephone number) belonging to said call distribution system. Via said network a third connection is made from said third caller to for example in/output 63 of switch 1, which informs processor 2 of said call, for example via in/output 83. Processor 2 for example receives said third telephone number and said certain telephone number and, via its first software 21, calculates which agent should handle this call and should provide said third caller with said information, thereby possibly using data stored in memory 23, and consults, via its memory 23, whether this third agent is available. In case this third agent is not available, processor 2 controls switch 1 via in/output 83 such that firstly in/output 63 is coupled to voice-respons-system 4, for example via in/output 95, resulting in said third caller getting a message for example saying that the third agent is busy and that an alternative in the form of a database will be available, and secondly in/output 63 is coupled to database 3, for example via in/output 91, resulting in the third caller being able to get (said and/or further) information from database 3. Further, this situation is stored as data in memory 23.

Said third caller might use for example so-called Dual Tone Multi Frequency signals or DTMF signals for informing database 3 which information he wants to receive, and database 3 could in response to these signals send signals back which are to be displayed on a display of the third caller's telephone, or could send a fax or an email to said third caller, with his address either already stored in database 3 and/or memory 23, or with said database 3 to be informed about said address. In case database 3 comprises said data-speech-converter 31, database 3 could send the information in the form of speech to said third caller. In case database 3 comprises said speech-data-converter 32, said third caller could use speech instead of said DTMF signals for informing database 3. After having informed said third caller via database 3, processor 2 for example controls switch 1 such that in/output 63 is coupled to voice-respons-system 4 for example via in/output 95, to give said third caller the option of either waiting for an available agent (for example via in/output 97 at queue 5) or disconnecting said third connection. As soon as said third agent becomes available, processor 2 is informed for example via in/output 73 and in/output 87, in response to which processor 2, via its send software, calculates which one of all calls originating from callers who have been put on hold should now be handled by this third agent. In case the result of this calculation is that said third agent should be connected to said third caller, processor 2 deletes said coupling between in/output 63 and in/output 97 and establishes a coupling between in/output 63 and in/output 73, resulting in said third connection now being present between the third caller and the third agent. According to an embodiment, for example during the evening/night, and/or during the weekend, and/or in response to certain emergencies, processor 2 could control switch 1 such that any caller is automatically connected to database 3. Thereto, processor 2 should be provided with a clock and/or with detection means for detecting emergencies. In general, processor 2 could be provided with switching means for (de)activating said software and/or for (de)activating said database. Said first software 21 for example comprises a calculation of a first term $EV_j$ for each (available) agent $j$, whereby

$$EV_j = SUM (i\ from\ C_p\ to\ C_q\ of\ (V(C_i)*L_j(C_i)) + k*It_j$$

with $i = C_p$ to $C_q$ being characteristics of the call profile, each defined characteristic $C_i$ having an associated value $V(C_i)$, each characteristic owned by an agent being associated with a level $L(C_i)$, $k$ being a system parameter, $It_j$ being an idle time of the agent $j$, and the selected agent corresponding to max $EV_j$. Said calculation could be made for available agents only or for all agents after which of course the availability has to be checked.

Said second software 22 for example comprises a calculation of a second term for each call that the agent can process and being

$$MAX\ SUM ((V(C_i)*L_j(C_i)) + m*Wtc_j$$

with $m$ being a system parameter, and $Wtc_j$ being a call waiting time.

Because of processor 2 controlling switch 1 for making connections between caller and agents in response to calls and in dependence of at least one signal associated with each caller, the call distribution system is skill-based. It can interconnect callers and agents based on mandatory skills like language etc. and based on optional skills like expertise/product knowledge. These skills or characteristics either are already stored, for example in memory 23 and for example in combination with network information like the caller's own telephone number, or should be transmitted to the system by the caller, for example via DTMF signals or via speech. Said call distribution system could further be used for providing statistics like the percentage of time the agent needs to process a call and the percentage of characteristics per call and the (average) waiting time per caller and further averages of time and/or characteristics, and could be used for generating alarms like in case waiting time exceeds a threshold and agent telephones are ringing longer than a threshold and too many callers hang up during queueing etc.

Instead of controlling switch 1 and database 3 and voice-respons-system 4 and queue 5 via in/outputs 81-87 it could be possible for processor 2 to control these units via control connections not shown in the figure. Instead of that it could also be possible to guide data channels as well as signalling channels via each in/output 61-97. Voice-respons-system 4 and queue 5 could be more or less integrated in switch 1 and/or in processor 2, and database 3 could be either more or less integrated in switch 1 and/or processor 2 or could be connected to switch 1 via a network not shown in the figure. Units 31 and 32 could also be located at other positions, like inside switch 1 and/or inside processor 2, or coupled to switch 1 via a network, etc.

The term 'said processor making said further connection in response to said queue holding said call' should not be regarded to have a too limited scope: because of said queue possibly more or less being integrated in switch 1 and/or processor 2, the further connection with database 3 in general will be made when an agent (for example the via first software 21 calculated agent) cannot be reached. Although as described before it should not be excluded that said further connection is made even before an agent has been tried to be reached, like in the case of the emergencies.

## Claims

1.  Call distribution system comprising

    -   a switch coupled to a network for making a connection between a caller and an agent in response to a call originating from said caller via said network for providing said caller with information, and
    -   a processor coupled to said switch for controlling said switch for making said connection between said caller and said agent in response to said call and in dependence of at least one signal associated with said caller, characterised in that the call distribution system comprises
    -   a database system coupled to said switch for providing said caller with further information in response to said call via a further connection between said caller and said database system, said further information being stored in said database system and being generated in dependence of at least one signal originating from said caller.

2.  Call distribution system according to claim 1, characterised in that said database system comprises a data-speech-converter for converting data into speech, said further information comprising said data being converted into said speech.

3.  Call distribution system according to claim 1 or 2, characterised in that said database system comprises a speech-data-converter for converting speech into data, said signal comprising said speech being converted into said data.

4. Call distribution system according to claim 1, 2 or 3, characterised in that said processor comprises first software for calculating a caller-agent-combination in response to said call and in dependence of said at least one signal associated with said caller.

5. Call distribution system according to claim 4, characterised in that said switch comprises a queue for holding said call in case said calculating of said caller-agent-combination has not led to a result.

6. Call distribution system according to claim 5, characterised in that said processor comprises second software for calculating an agent-caller-combination in response to said call and in dependence of said at least one signal associated with said caller.

7. Call distribution system according to claim 5 or 6, characterised in that said processor makes said further connection in response to said queue holding said call.

8. Call distribution system according to claim 1, 2, 3, 4, 5, 6 or 7, characterised in that said at least one signal associated with said caller comprises a network signal originating from said network.

9. Call distribution system according to claim 8, characterised in that said at least one signal associated with said caller comprises a further signal originating from said caller.

10. Method for distributing calls and comprising the steps of

   - making a connection between a caller and an agent via a switch coupled to a network in response to a call originating from said caller via said network for providing said caller with information, and
   - controlling said switch via a processor coupled to said switch for making said connection between said caller and said agent in response to said call and in dependence of at least one signal associated with said caller, characterised in that the method comprises the step of
   - making a further connection between said caller and a database system coupled to said switch for providing said caller with further information in response to said call, said further information being stored in said database system and being generated in dependence of at least one signal originating from said caller.

61 62 63 64 65 66 67

81
82
83
84
85
86
87

21
22
2
23

1

91
92
93
94
95
96
97

31
3
32

4

5

71 72 73 74 75 76 77

Fig. 1

EP 0 897 238 A1

**European Patent Office**

**EUROPEAN SEARCH REPORT**

Application Number

EP 97 44 0065

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | MOOSMUELLER L: "SCHNITTSTELLEN DER KOMMUNIKATION" NET - NACHRICHTEN ELEKTRONIK UND TELEMATIK, vol. 50, no. 4, April 1996, HEIDELBERG (DE), page 37 XP000582743 | 1-3,10 | H04M3/50 |
| Y | * page 37, column 2 - column 3 * | 4-9 | |
| D,Y | EP 0 740 450 A (IBM ;SIEMENS ROLM COMM INC (US)) * abstract * * page 3, line 12 - line 47 * * page 11, line 39 - line 52 * * claim 1 * * figure 2 * | 4-9 | |
| X Y | WO 97 10667 A (EDIFY CORP) * page 2, line 5 - line 23 * * page 5, line 32 - page 6, line 11 * * page 6, line 27 - line 33 * * claim 7 * * figures 1A,3A,3B * | 1,8-10 4-6 | TECHNICAL FIELDS SEARCHED (Int.Cl.6) H04M |
| D,Y A | US 5 291 550 A (LEVY YONATAN A ET AL) * column 2, line 25 - column 3, line 20 * * column 3, line 47 - column 4, line 3 * * claims 1,11,31,33 * | 4-6 8,9 | |
| X Y | US 5 164 981 A (MITCHELL JAMES ET AL) * column 2, line 59 - column 3, line 44 * * column 3, line 64 - column 4, line 40 * * figure 1 * | 1,2,10 3 | |

-/--

The present search report has been drawn up for all claims

| Place of search | Date of completion of the search | Examiner |
|---|---|---|
| THE HAGUE | 14 April 1998 | Neves Appelt, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 97 44 0065

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y<br>A | US 4 943 995 A (DAUDELIN ABRAHAM N ET AL)<br><br>* column 1, line 43 - line 55 *<br>* column 2, line 28 - line 43 *<br>* column 3, line 51 - column 4, line 26 *<br>* claims 1,2 *<br>----- | 3<br>1,2,9,10 | |
| | | | **TECHNICAL FIELDS SEARCHED (Int.Cl.6)** |

The present search report has been drawn up for all claims

| Place of search | Date of completion of the search | Examiner |
|---|---|---|
| THE HAGUE | 14 April 1998 | Neves Appelt, D |

EPO FORM 1503 03.82 (P04C01)